(19)

Europäisches
Patentamt
European
Patent Office
Office européen
des brevets

(11) **EP 2 187 628 A2**

## (12) EUROPEAN PATENT APPLICATION

(43) Date of publication:
**19.05.2010 Bulletin 2010/20**

(51) Int Cl.:
**H04N 5/445** *(2006.01)*

(21) Application number: **09164350.2**

(22) Date of filing: **01.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **07.11.2008 KR 20080110475**

(71) Applicant: **Samsung Electronics Co., Ltd.**
**Suwon-si,**
**Gyeonggi-do 442-742 (KR)**

(72) Inventors:
• **Park, Kyoung-guk**
**Suwon-si, Gyeonggi-do (KR)**

• **Hong, Joo-sun**
**Suwon-si, Gyeonggi-do (KR)**
• **You, Chin-yong**
**Hwaseong-si, Gyeonggi-do (KR)**
• **Oh, Si-myoung**
**Suwon-si, Gyeonggi-do (KR)**
• **Lee, Jae-Hwan**
**Suwon-si, Gyeonggi-do (KR)**

(74) Representative: **Fearnside, Andrew Simon**
**Appleyard Lees**
**15 Clare Road**
**Halifax, HX1 2HY (GB)**

(54) **Display device and method for displaying power consumption**

(57)    A display device is provided, including an input unit through which a command to display power consumption information is input, a calculation unit which calculates a power consumption value in a current display mode in response to the command, and a display unit which displays information regarding the power consumption value calculated by the calculation unit.

# FIG. 1

Description

## CROSS-REFERENCE TO RELATED APPLICATIONS

This application claims priority from Korean Patent Application No. 10-2008-0110475, filed November 7, 2008, in the Korean Intellectual Property Office, the disclosure of which is incorporated herein by reference in its entirety.

## BACKGROUND OF THE INVENTION

**1. Field of the Invention**

Devices and methods consistent with the present invention relate to a display device and method for displaying power consumption information, and more particularly, to a display device and method for displaying power consumption information of the display device in a current display mode.

**2. Description of the Related Art**

As electronic technology has been developing, various kinds of home appliances have been used. Examples of the home appliances include display devices such as televisions. Recently, the screens of display devices, such as liquid crystal displays (LCD) and plasma display panels (PDP), have become bigger, resulting in increased power consumption of the television units compared with cathode-ray tube televisions.
Accordingly, users may wish to know how much power their big screen display devices consume.
Generally, a label showing power consumption is attached to display devices, but such a label only shows the maximum power consumption and does not show variation in power consumption according to the usage.
Furthermore, since power consumption used by the components of the display device is not shown, the user does not know how much power a specific component consumes.
Therefore, there is a need to determine how much power the components of the display device consume.

## SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.
Exemplary embodiments of the present invention provide a display device and method for calculating and displaying power consumption using a software-oriented method.
According to the present invention there is provided an apparatus and method as set forth in the appended claims. Other features of the invention will be apparent from the dependent claims, and the description which follows.
According to an exemplary aspect of the present invention, there is provided a display device including a user input unit, a calculation unit which calculates power consumption in a current display mode if a user command to display the power consumption is input through the user input unit, and a display unit which displays information regarding the power consumption calculated by the calculation unit.
The calculation unit may individually calculate and sum up power consumption of each component used to output a broadcast so as to calculate a total power consumption of the display device.
The calculation unit may individually calculate power consumption of each component used to output a broadcast, and the display unit may additionally display the individually calculated power consumption of each component.
The calculation unit may individually calculate power consumption of each component used to output a broadcast, and the display unit may additionally display power consumption of a component selected by a user from among the individually calculated power consumption of each component.
The display device may further include a storage unit which stores information regarding power consumption of other components previously calculated by a user.
The calculation unit may calculate power consumption of a sound component using an audio output value set in the current display mode, calculate power consumption of a backlight unit using dimming information corresponding to a video output value set in the current display mode, and sum up the calculated power consumption of the sound component and backlight unit and the power consumption of the other components stored in the storage unit so as to calculate the power consumption in the current display mode.
The storage unit may store individually stores the power consumption of each component calculated by the calculation unit, or store the sum of the power consumption of each component calculated by the calculation unit.

The calculation unit may calculate the power consumption of the sound component E(vol) using the following equation: E(vol)=E(sound)*A(vol_set)/A(vol_max), wherein E(sound) indicates a maximum output power of the sound component, A(vol_max) indicates a maximum volume, and A(vol_set) indicates a volume set by the user.

The calculation unit may calculate the power consumption of the backlight unit E(dim) using the following equation: E(dim)=E(blu)*A(dim_set)/A(dim_max), wherein E(blu) indicates a maximum output power of the backlight unit, A(dim_max) indicates a maximum dimming value, and A(dim_set) indicates a dimming value set by a user.

The display mode may be a mode in which a broadcast is output according to an audio output value and a video output value which are individually set by a user.

The display mode may be one of a day mode, a night mode, a clear screen mode, a soft screen mode, a standard screen mode, a movie screen mode, and a news screen mode.

According to another exemplary aspect of the present invention, there is provided a method for displaying power consumption of a display device, the method including outputting a broadcast according to a preset audio output value and a preset video output value, calculating power consumption in a current display mode, in which the broadcast is output according to the preset audio output value and the preset video output value, if a user command to display the power consumption is input, and displaying information regarding the calculated power consumption.

The calculating operation may include individually calculating and summing up power consumption of each component used to output the broadcast so as to calculate a total power consumption of the display device.

The method may further include additionally displaying individually calculated power consumption of each component used to output the broadcast.

The method may further include additionally displaying individually calculated power consumption of a component selected by a user from among components used to output the broadcast.

The calculating operation may include calculating power consumption of a sound component using an audio output value set in the current display mode, calculates power consumption of a backlight unit using dimming information corresponding to a video output value set in the current display mode, and summing up the calculated power consumption of the sound component and backlight unit and pre-stored power consumption of other components so as to calculate the power consumption in the current display mode.

The method may further include individually storing calculated power consumption of each component, or storing the sum of calculated power consumption of each component.

The calculating operation may include calculating the power consumption of the sound component E(vol) using the following equation: E(vol)=E(sound)*A(vol_set)/A(vol_max), wherein E(sound) indicates a maximum output power of the sound component, A(vol_max) indicates a maximum volume, and A(vol_set) indicates a volume set by a user.

The calculating operation may include calculating the power consumption of the backlight unit E(dim) using the following equation: E(dim)=E(blu)*A(dim_set)/A(dim_max), wherein E(blu) indicates a maximum output power of the backlight unit, A(dim_max) indicates a maximum dimming value, and A(dim_set) indicates a dimming value set by a user.

The display mode may be one of a day mode, a night mode, a clear screen mode, a soft screen mode, a standard screen mode, a movie screen mode, and a news screen mode.

## BRIEF DESCRIPTION OF THE DRAWINGS

The above and/or other aspects of the present invention will be more apparent by describing certain exemplary embodiments of the present invention with reference to the accompanying drawings, in which:

FIG. 1 is a schematic block diagram of a display device according to an exemplary embodiment of the present invention;

FIG. 2 is a detailed block diagram of the display device according to an exemplary embodiment of the present invention;

FIG. 3 illustrates an example of displaying power consumption information in the display device according to an exemplary embodiment of the present invention;

FIG. 4 illustrates an example of displaying power consumption information in the display device according to an exemplary embodiment of the present invention;

FIG. 5 illustrates an example of displaying power consumption information in the display device according to an exemplary embodiment of the present invention;

FIG. 6 is a flow chart illustrating a method for displaying power consumption information in the display device according to an exemplary embodiment of the present invention; and

FIG. 7 is a flow chart illustrating a method for calculating power consumption values according to an exemplary embodiment of the present invention.

## DETAILED DESCRIPTION OF EXEMPLARY EMBODIMENTS

Exemplary embodiments of the present invention are described in greater detail below with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

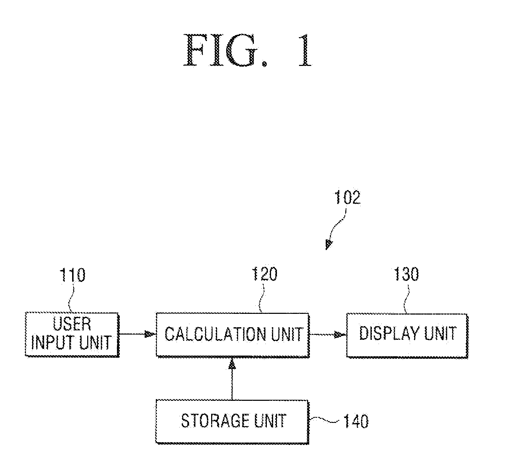

FIG. 1 is a schematic block diagram of a display device 102 according to an exemplary embodiment of the present invention. As illustrated in FIG. 1, the display device 102 may include a user input unit 110, a calculation unit 120, and a display unit 130.

The user input unit 110 inputs a user command to display power consumption information. More specifically, a user may input a command to display power consumption information by manipulating a key pad provided on a main body of the display device or manipulating a remote controller. Alternatively, the user input unit 110 may be implemented as a touch screen. In this case, an on-screen display (OSD) menu to input a command to display power consumption information is displayed on the screen of the display device. When a user touches the OSD menu, the user input unit 110 recognizes that the user command to display power consumption information is input.

The calculation unit 120 calculates a power consumption value in a current display mode if a user command to display power consumption information is input. For example, a display mode is a mode in which an output state is defined according to an audio output value set by the user, that is, a volume value, or a video output value set by the user. A video output value indicates a value regarding various video information, such as the luminance, contrast, chroma, and brightness, which is set by the user.

For example, a display mode is a mode in which an audio output value and a video output value set as the default are applied. For example, the display device may operate in various display modes such as a day mode, a night mode, a clear screen mode, a soft screen mode, a standard screen mode, a movie screen mode, and a news screen mode. A mode of the display device is converted according to selection by the user. Audio and video are output as an audio output value and a video output value defined in the selected mode.

The calculation unit 120 calculates power consumption values of individual components used to output a broadcast signal. More specifically, the display device may use a board in which various circuits used to process a broadcast signal are integrated. Examples of such circuits or components include a sound component which outputs an audio signal from a processed broadcast signal, a panel which outputs a video signal from a processed broadcast signal, a backlight unit which provides the luminance needed to output a video signal, and the like. The total power consumption value of the display device is the sum of respective power consumption values of such components. Accordingly, the calculation unit 120 calculates the total power consumption value by separately calculating a power consumption value of each component and summing up the calculated power consumption values.

The power consumption of the board and the panel does not vary to great extent even if the user sets an audio output value or a video output value to be great values. Accordingly, the power consumption value of the board and the panel (referred to hereinafter as the "power consumption value of other components") may be calculated in advance under a particular experimental condition, pre-stored, and repeatedly used in further calculations.

The power consumption value of other components may be calculated as:

$$E(board)=E(total)-E(blu\_set)-E(sound\_set) \qquad (1)$$

In Equation 1, E(board) indicates the power consumption value of other components, E(total) indicates the total power consumption value under the experimental condition, E(blu_set) indicates the power consumption value of the backlight unit under the experimental condition, and E(sound_set) indicates the power consumption value of the sound component under the experimental condition.

That is, for calculation, output values of the backlight unit and the sound component as, for example, an amplifier or a speaker, may be set to be equal to particular power values. For example, the output power of the backlight unit is fixed to 100W, and the output power of the sound component is fixed to 1W. Under this condition, the total power consumption value E(total) of the display device can be calculated by directly measuring the electric current flowing into the display device and the voltage applied to the display device as P=V x I.

Consequently, the power consumption value of other components E(board) can be calculated by subtracting the power values 100W and 1W from the total power consumption value E(total). In this case, since the output value of the sound component is negligible, the output value of the sound component may be omitted.

The power consumption value of other components E(board) which is calculated using the above method is pre-stored in a storage unit 140.

The setting state of an audio output value affects the power consumption of the sound component, and the setting state of a video output value affects the power consumption of the backlight unit.

Therefore, the calculation unit 120 may calculate the power consumption value of the sound component as:

$$E(vol)=E(sound)*A(vol\_set)/A(vol\_max) \qquad (2)$$

In Equation 2, the sound component power consumption value E(sound) indicates the maximum output power of the sound component, A(vol_max) indicates the maximum audio output value, and A(vol_set) indicates the audio output value set by the user.

The power consumption of the sound component varies according to an audio output value set by the user. The power consumption value of the sound component at the maximum level may be provided by a manufacturer. The power consumption value of the sound component at various levels can be obtained using Equation 2 based on proportional relationship. For example, if it is assumed that the maximum audio output value of the sound component is level 50, the power consumption value at level 50 is 80W If level 20 is set by the user in the current display mode, the power consumption value of the sound component in the current display mode is calculated as approximately 80*20/50=32W

In addition, the calculation unit 120 may calculate the power consumption value of the backlight unit as:

$$E(dim)=E(blu)*A(dim\_set)/A(dim\_max) \qquad (3)$$

In Equation 3, the power consumption value of the backlight unit E(blu) indicates the maximum output power of backlight unit, A(dim_max) indicates the maximum dimming value, and A(dim_set) indicates the dimming value set by the user.

As described above, a video output value is determined according to various video factors such as the luminance, the chroma, the contrast, and the brightness. Accordingly, a luminance value, that is, a dimming value of the backlight unit is determined by summing up the video factor values. Obtaining a dimming value from video factor values may be performed using one of known algorithms. For example, if a dimming value ranges from 0 to 255, the maximum dimming value A(dim_max) is 255. It is assumed that if a dimming value is 255, an output power value of the backlight unit is 200W If the current dimming value is 100, E(dim) is calculated as approximately 200*10/255=78.4W

The calculation unit 120 calculates the total power consumption value by adding the power consumption values of the components, calculated using Equations 2 and 3 and the pre-stored power consumption value of other components. The total power consumption value may be obtained as:

$$E(final)=E(board)+E(vol)+E(dim) \qquad (4)$$

In the above example, if the power consumption value of other components is 60W, the total power consumption value is approximately 60+32+78.4=170.4W

The display unit 130 displays information regarding the power consumption value calculated by the calculation unit 120 on the screen. In this case, the information may be displayed in an OSD method.

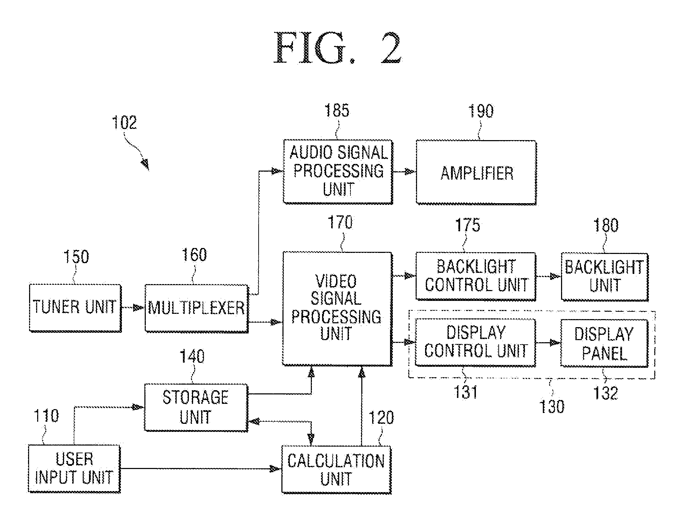

FIG. 2 is a detailed block diagram of the display device 102 according to an exemplary embodiment of the present invention.

As illustrated in FIG. 2, the display device 102 may include an user input unit 110, a calculation unit 120, a display unit 130, a storage unit 140, a tuner unit 150, a multiplexer 160, a video signal processing unit 170, a backlight control unit 175, a backlight unit 180, an audio signal processing unit 185, and an amplifier 190.

The tuner unit 150 is tuned to a broadcast channel and receives a broadcast signal.

The multiplexer 160 divides the broadcast signal received by the tuner unit 150 into a video signal and an audio signal. If the broadcast signal includes a data signal, the data signal is also divided by the multiplexer 160. In this case, the display device may further include a data signal processing unit.

The video signal divided by the multiplexer 160 is transmitted to the video signal processing unit 170. The video signal processing unit 170 decodes, interleaves, deinterleaves, and scales the video signal to convert the video signal into a displayable format. For example, the video signal processing unit 170 processes the video signal to have the luminance, the brightness, the chroma, and the contrast corresponding to a video output value preset by the user.

The display unit 130 receives the video signal processed by the video signal processing unit 170, and displays the video signal on the screen. The display unit 130 may include a display panel 132 and a display control unit 131. The display panel 132 may be implemented as an LCD. The display control unit 131 controls the liquid crystal cells of the display panel 132 according to the video signal to express an image.

The video signal processing unit 170 calculates a dimming value corresponding to the video output value preset by the user, and provides the backlight control unit 175 with the dimming value. The backlight control unit 175 drives the backlight unit 180 to have the luminance corresponding to the dimming value.

The audio signal processing unit 185 decodes, interleaves, and deinterleaves an audio signal received from the multiplexer 160 to restore audio data. The restored audio data are transmitted to the amplifier 190. The amplifier 190 amplifies the audio data to have a gain corresponding to an audio output value set by the user, and outputs the audio data.

The storage unit 140 stores the audio output value and the video output value which are set by the user in the current display mode. The storage unit 140 also stores information regarding previously measured power consumption value of other components. The storage unit 140 also stores information regarding a fixed display mode having an audio output value and a video output value which are defined as the default by a manufacturer or the user. That is, the manufacturer or the user may experimentally measure video factors and the sound volume suitable for viewing according to various content categories including movies, news, drama, etc., and set an audio output value and a video output value as the default using the measured values. Alternatively, the manufacturer or the user may set values suitable for viewing according to the time zone such as day or night, or set a display mode to express clearly or softly according to the screen characteristics. As described above, if various display modes are set as the default, the user can set a display mode suitable for currently viewing content, a viewing time, and the user's preference by selecting a conversion button.

Although a single storage unit is illustrated in FIG. 2, the storage unit 140 may be implemented as at least one non-volatile memory and at least one volatile memory. In this case, the information described above is stored in appropriate memory.

The calculation unit 120 calculates power consumption values of the components as described above. In FIG. 2, the calculation unit 120 calculates the power consumption value of the backlight unit 180 and the power consumption value of the amplifier 190 using Equation 3 and Equation 2, respectively. The power consumption value of other components remains nearly constant regardless of a display mode, and thus can be calculated using Equation 1 and pre-stored.

If the display mode is set as the default, the storage unit 140 may store the power consumption value which is previously calculated for each display mode. In this case, the power consumption value stored in the storage unit 140 is read out and displayed without being calculated whenever a display mode changes.

In addition, the storage unit 140 may store the total power consumption value obtained by summing up the power consumption values of the components, and separately store the power consumption value of each component. Accordingly, the display unit 140 may display the power consumption value of each component as well as the total power consumption value. In this case, the display unit 140 may selectively display the power consumption values of components which the user wishes to know. The user may input desired information through the user input unit 110 using a key on the remote controller.

The user input unit 110 receives a user command to display power consumption information, and other user commands as described with reference to FIG. 1. Detailed description of the same components as those in FIG. 1 is not repeated here.

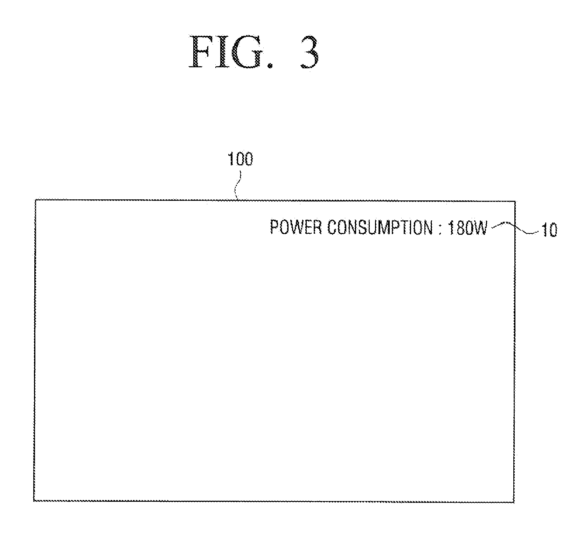

FIGS. 3, 4, and 5 illustrate examples of displaying information regarding power consumption in the display device according to an exemplary embodiment of the present invention.

In FIG. 3, only the total power consumption value 10 is displayed on one side of the screen 100 as an OSD. In this case, the screen 100 can keep displaying currently viewing content.

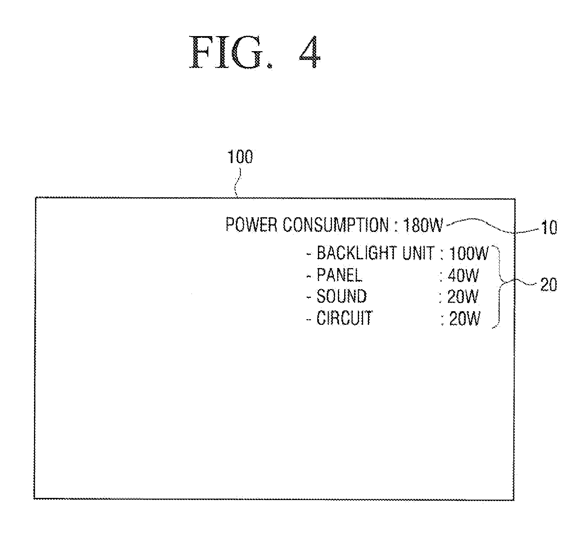

In FIG. 4, the total power consumption value 10 is displayed on one side of the screen 100. The power consumption values of the components 20 are displayed underneath the total power consumption value 10. In FIG. 4, the power consumption values of the backlight unit, the sound component, the panel, and the circuit are displayed. However, the power consumption values of the panel and the circuit do not substantially change, and thus can be grouped as one category and displayed as 60W.

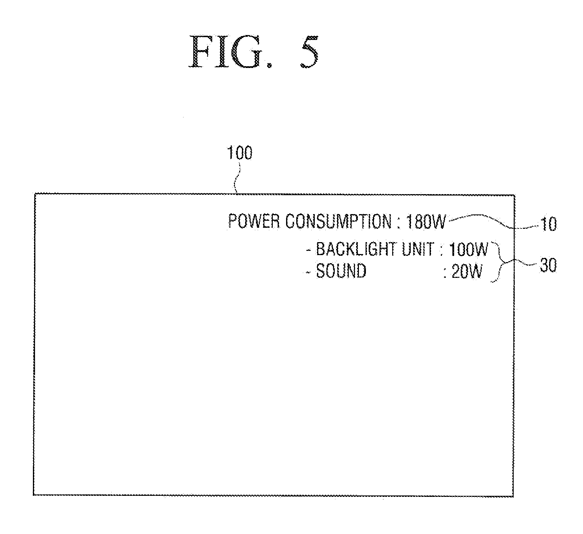

As illustrated in FIG. 5, the total power consumption value 10 is displayed. The power consumption values of only selected components 30 which the user wishes to know are displayed underneath the total power consumption value.

The process of displaying the power consumption value of the components can be performed in various manners. For example, if the user inputs a command to display power consumption information, the display device displays the total power consumption value as illustrated in FIG. 3, and activates a menu to select whether to display the power consumption values of the components thereunder. If the user selects to display the power consumption values of selected components, the display device displays the power consumption values of the selected components.

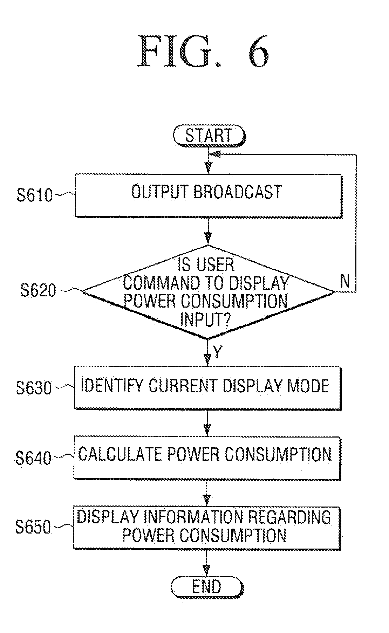

FIG. 6 is a flow chart illustrating a method for displaying power consumption information in the display device according to an exemplary embodiment of the present invention.

As illustrated in FIG. 6, if a broadcast signal is being output (S610), and a user command to display power consumption information is input (S620), a current display mode is identified (S630). Identifying the current display mode indicates identifying a setting state of a currently output image characteristics, that is, a video output value, and a setting state of a currently output sound volume, that is, an audio output value. Alternatively, identifying the current display mode indicates identifying which display mode is selected from among fixed display modes and identifying a video output value and an audio output value in the selected display mode.

Subsequently, the power consumption information corresponding to the current display mode is calculated (S640). Since a method for calculating the power consumption information has been described above in detail with reference to FIG. 1, description is not repeated here.

Information regarding the calculated power consumption is displayed on the screen (S650).

According to exemplary embodiments of the present invention, the display device may display information regarding only the total power consumption, display information regarding the power consumption of each component as well as the total power consumption, or display information regarding only the power consumption of each component. In addition, the power consumption values of only selected components of which the user wishes to know the power consumption information, may be displayed with the total power consumption information or separately from the total power consumption information.

Following the above process, the user can identify the power consumption value of the display device in the current display mode set by the user. Furthermore, the process illustrated in FIG. 6 may be performed using software-oriented calculation, so additional hardware might not be needed.

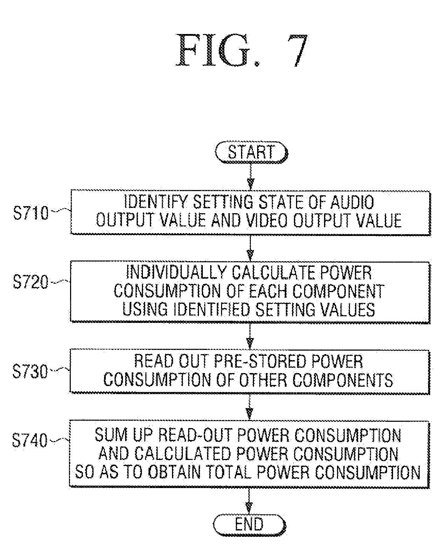

FIG. 7 is a flow chart illustrating an example of a process of calculating power consumption values according to an exemplary embodiment of the present invention.

As illustrated in FIG. 7, a setting state of an audio output value and a video output value of a currently displayed broadcast is identified (S710). More specifically, the volume set by the user or a dimming value according to video factor values set by the user are identified.

Subsequently, the power consumption value of each component is individually calculated using the identified setting values (S720). More specifically, the setting values of the sound component and the backlight unit are individually calculated using Equation 2 and Equation 3, respectively.

Pre-stored information regarding the power consumption value of other components is read out (S730), and then is added to the calculated power consumption value. The total power consumption value of the display device is calculated (S740).

As described above, since the power consumption of each component of the display device can be identified, the user can maintain the power consumption of each component at the minimum level, and set and view the desired screen, thereby enabling the optimum screen setting.

In the exemplary embodiments of the present invention, a method for displaying power consumption information when a broadcast signal is being output is described. However, the present invention is not limited to a broadcast signal. The inventive concept can be applied even when a signal provided from a recording medium playback device such as a digital versatile disk (DVD) player is being processed. In this case, the tuner unit 150 illustrated in FIG. 2 can be omitted as a component.

In addition, in the exemplary embodiments of the present invention, the display device is not limited to a television, but may be implemented as a monitor, a laptop computer, or an electronic picture frame.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A display device, comprising:

   an input unit through which a command to display information regarding power consumption is input;
   a calculation unit which calculates a power consumption value in a current display mode in response to the command ; and
   a display unit which displays information regarding the power consumption value calculated by the calculation unit.

2. The display device according to claim 1, wherein the calculation unit calculates:

   a power consumption value of each of a plurality of components of the display device, and
   a total power consumption value of the display device as a sum of the calculated power consumption values of the components.

3. The display device according to claim 1, wherein the calculation unit calculates a power consumption value of each of a plurality of components of the display device, and the display unit displays the calculated power consumption value of each component.

4. The display device according to claim 1, wherein the calculation unit calculates a power consumption value of each of a plurality of components of the display device, and the display unit displays the calculated power consumption value of a component selected from the plurality of components.

5. The display device according to claim 1, further comprising:

   a storage unit, which stores information regarding power consumption of other components of the display device calculated in advance, wherein the calculation unit calculates a total power consumption value in the current display mode as a sum of the calculated power consumption values of the sound component and the backlight unit, and power consumption values of other components stored in the storage unit.

6. The display device according to claim 1, wherein the calculation unit calculates the power consumption value of the sound component E(vol) as:

$$E(vol)=E(sound)*A(vol\_set)/A(vol\_max)$$

   wherein E(sound) is a maximum output power of the sound component, A(vol_max) is a maximum volume, and A(vol_set) is a volume set by a user.

7. The display device according to claim 1, wherein the calculation unit calculates the power consumption value of the backlight unit E(dim) as:

$$E(dim)=E(blu)*A(dim\_set)/A(dim\_max)$$

   wherein E(blu) is a maximum output power of the backlight unit, A(dim_max) is a maximum dimming value, and A(dim_set) is a dimming value set by a user.

8. The display device according to claim 1, wherein the display mode includes a mode in which a broadcast signal is output according to an audio output value and a video output value which are individually set by a user.

9. A method for displaying power consumption information of a display device, the method comprising:

outputting, by the display device, a broadcast according to a preset audio output value and a preset video output value;
calculating a power consumption value in a current display mode, in which the broadcast is output, if a command to display the power consumption information is input to the display device; and
displaying information regarding the calculated power consumption value.

10. The method according to claim 9, wherein the calculating comprises:

calculating a power consumption value of each of a plurality components of the display device used to output the broadcast; and
calculating a total power consumption value of the display device as a sum of the calculated power consumption values of the components.

11. The method according to claim 9, further comprising:

displaying the calculated power consumption value of each component separately.

12. The method according to claim 9, further comprising:

displaying the calculated power consumption value of a component selected from the plurality of components.

13. The method according to claim 9, wherein the calculating comprises:

calculating a power consumption value of a sound component of the display device using an audio output value set in the current display mode;
calculating a power consumption value of a backlight unit of the display device using dimming information corresponding to a video output value set in the current display mode; and
determining a total power consumption value in the current display mode by summing up the calculated power consumption values of the sound component and backlight unit and pre-stored power consumption values of other components of the display device.

14. The method according to claim 13, further comprising:

calculating the power consumption value of the sound component E(vol) as:

$$E(vol)=E(sound)*A(vol\_set)/A(vol\_max)$$

wherein E(sound) is a maximum output power of the sound component, A(vol_max) is a maximum volume, and A(vol_set) is a volume set by a user.

15. The method according to claim 13, further comprising:

calculating the power consumption value of the backlight unit E(dim) as:

$$E(dim)=E(blu)*A(dim\_set)/A(dim\_max)$$

wherein E(blu) is a maximum output power of the backlight unit, A(dim_max) is a maximum dimming value, and A(dim_set) is a dimming value set by a user.

# FIG. 1

102

110

120

130

| USER INPUT UNIT | → | CALCULATION UNIT | → | DISPLAY UNIT |

STORAGE UNIT ~140

# FIG. 2

# FIG. 3

100

POWER CONSUMPTION : 180W ~~~ 10

# FIG. 4

100

POWER CONSUMPTION : 180W —— 10
    - BACKLIGHT UNIT : 100W
    - PANEL    : 40W
    - SOUND   : 20W  — 20
    - CIRCUIT  : 20W

# FIG. 5

100

POWER CONSUMPTION : 180W —— 10
    - BACKLIGHT UNIT : 100W
    - SOUND        : 20W —— 30

# FIG. 6

START

S610 — OUTPUT BROADCAST

S620 — IS USER COMMAND TO DISPLAY POWER CONSUMPTION INPUT? — N

Y

S630 — IDENTIFY CURRENT DISPLAY MODE

S640 — CALCULATE POWER CONSUMPTION

S650 — DISPLAY INFORMATION REGARDING POWER CONSUMPTION

END

# FIG. 7

START

S710 — IDENTIFY SETTING STATE OF AUDIO
OUTPUT VALUE AND VIDEO OUTPUT VALUE

S720 — INDIVIDUALLY CALCULATE POWER
CONSUMPTION OF EACH COMPONENT
USING IDENTIFIED SETTING VALUES

S730 — READ OUT PRE-STORED POWER
CONSUMPTION OF OTHER COMPONENTS

S740 — SUM UP READ-OUT POWER CONSUMPTION
AND CALCULATED POWER CONSUMPTION
SO AS TO OBTAIN TOTAL POWER CONSUMPTION

END

**EP 2 187 628 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020080110475